# EUROPEAN PATENT APPLICATION

(11) **EP 1 976 275 A2**
(43) Date of publication of application: **01.10.2008**
(21) Application number: 08003263.4
(22) Date of filing: 22.02.2008
(51) Int. Cl.: H04N 5/44

(54) **Broadcast receiving apparatus and broadcast receiving method**

(30) Priority: 29.03.2007 JP 2007086118
(71) Applicant: Kabushiki Kaisha Toshiba, Minato-ku, Tokyo 105-8001 (JP)
(72) Inventor: Kakubashi, Takahiro, Tokyo 105-8001 (JP)
(74) Representative: HOFFMANN EITLE

(57) **Abstract**

According to one embodiment, a broadcast receiving apparatus includes an analog receiving unit (13) which receives analog broadcast signals and outputs video and sound signals, a storage unit (35) which stores analog broadcast termination time/date information (FIG. 2) indicating time/date when analog broadcast is terminated, a detecting unit (37) which captures current time/date information, and a control unit (30) which terminates a reception function of the analog receiving unit when it is determined that analog broadcast has been terminated as a result of comparing the time/date information captured by the detecting unit with the analog broadcast termination information stored in the storage unit.

## Description

One embodiment of the invention relates to a broadcast receiving apparatus and a broadcast receiving method for determining analog broadcast termination.

Application of digital technologies in the field of broadcasting has greatly increased in recent years, and digital terrestrial broadcasting capable of providing higher quality video images is becoming widespread. Following this trend towards digital terrestrial broadcasting, conventional analog broadcasting will be terminated by the time receiving apparatuses able to receive digital terrestrial broadcasting are widespread. The times and dates of the termination of analog broadcast have been already officially announced, as in Japan.

Patent Document 1 (Jpn. Pat. Appln. KOKAI Publication No. 2006-5785) discloses the technology of stopping the supply of power to an analog broadcast signal processing unit by determining, when analog broadcasting cannot actually be received, that analog broadcasting has been terminated.

In the prior art according to the patent document 1, if a broadcast signal cannot actually be received, it is estimated that analog broadcast has been terminated. However, if this is a temporary interruption of analog broadcasting due to time zone or reception conditions, the cessation of the supply of power to the processing unit puts an actual end to analog broadcasting.

It is accordingly an object of the invention to provide a broadcast receiving apparatus and a broadcast receiving method that are capable of terminating an analog broadcast reception function by securely detecting the termination of analog broadcasting.

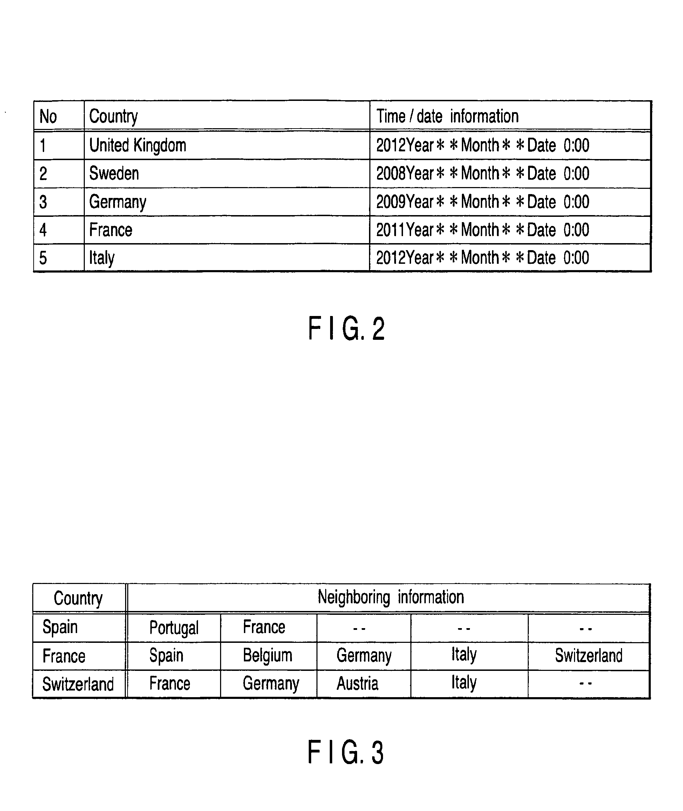

An embodiment to achieve the above object is a broadcast receiving apparatus including:
an analog receiving unit (13) which receives analog broadcast signals and output video sound signals;
a storage unit (35) which stores analog broadcast termination time/date information (FIG. 2) indicating time/date when analog broadcast is terminated;
a detecting unit (37) which captures current time/date information; and
a control unit (30) which terminates a reception function of the analog receiving unit when it is determined that analog broadcast has been terminated as a result of comparing the time/date information captured by the detecting unit with the analog broadcast termination information stored in the storage unit.

Thus, for example, pieces of analog termination date/time information officially announced are prestored in a television set or the like, and the termination of each analog broadcast is determined by the information. This makes it possible to securely detect each broadcast termination without erroneous determination.

The invention can be more fully understood from the following detailed description when taken in conjunction with the accompanying drawings, in which:
FIG. 1 is a block diagram showing an example of a configuration of a broadcast receiving apparatus according to one embodiment of the invention;
FIG. 2 is a diagram explaining an example of analog terrestrial reception termination time/date information that the broadcast receiving apparatus of the embodiment of the invention deals with;
FIG. 3 is a diagram explaining neighboring country information that the broadcast receiving apparatus deals with;
FIG. 4 is a flowchart illustrating an example (time/date information) of an analog terrestrial reception termination process performed by the broadcast receiving apparatus;
FIG. 5 is a flowchart illustrating another example (signal detection) of the analog terrestrial reception termination process performed by the broadcast receiving apparatus;
FIG. 6 is a flowchart illustrating another example (time/date information and signal detection) of the analog terrestrial reception termination process performed by the broadcast receiving apparatus;
FIG. 7 is a flowchart illustrating an example of an analog terrestrial reception termination process performed by the broadcast receiving apparatus;
FIG. 8 is a diagram explaining an example of the analog terrestrial reception termination process performed by the broadcast receiving apparatus;
FIG. 9 is a diagram showing an example of a screen used for setting an analog broadcast reception termination process performed by the broadcast receiving apparatus; and
FIG. 10 is a flowchart illustrating an example of a process of updating analog terrestrial reception termination time/date information, which is performed by the broadcast receiving apparatus.

There will be described an embodiment of the invention in detail with reference to the accompanying drawings.

### <Broadcast receiving apparatus according to One Embodiment>

### (Configuration and Operation of Broadcast Receiving Apparatus)

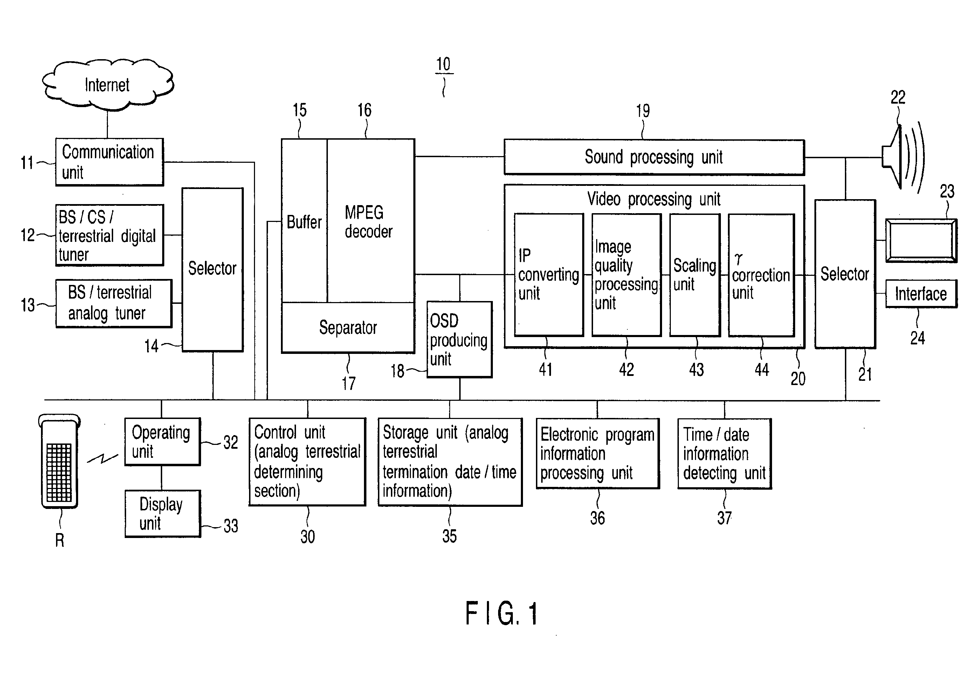

Referring to the accompanying drawings, an example of the configuration of the broadcast receiving apparatus, such as a digital television apparatus, according to one embodiment of the present invention will be described in detail below. FIG. 1 is a block diagram showing an example of the configuration of the broadcast receiving apparatus according to the present embodiment.

A broadcast receiving apparatus 10 is an example of a television apparatus, as shown in FIG. 1, and a control unit 30 is connected to each unit via a data bus in order to control the entire operation. The broadcast receiving apparatus 10 includes: as its main component, an MPEG decoder 16 composing the reproducer, and the control unit 30 that controls the operation of the apparatus main body. The broadcast receiving apparatus 10 has an input-side selector 14 and an output-side selector 21. Connected to the input-side selector 14 are: a communication unit 11 having functions of mailer, LAN or the like; BS/CS/terrestrial digital tuner 12; and BS/terrestrial analog tuner 13.

The broadcast receiving apparatus 10 further includes: a buffer 15, a separator 17, the MPEG decoder 16, and an OSD (On Screen Display) producing unit 18. The buffer 15 temporarily stores a demodulation signal from the BS/CS/terrestrial digital tuner 12. The separator 17 separates packets (i.e., stored demodulation signals) into groups according to types. The MPEG decoder 16 subjects a video sound signal packet supplied by the separator 17 to an MPEG decoding process, thereby outputting video and sound signals. The OSD producing unit 18 superposes operation information, etc., on the video signal. The broadcast receiving apparatus 10 further includes: a sound processing unit 19, a video processing unit 20, the selector 21, a speaker 22, a display unit 23, and an interface 24. The sound processing unit 19 subjects the sound signal from the MPEG decoder 16 to an amplifying process, etc. The video processing unit 20 receives the video signal from the MPEG decoder 16 and OCD producing unit 18, and subjects the video signal to a desired video-processing. The selector 21 selects a destination to which the sound signal and video signal are output. The speaker 22 outputs sound according to the sound signal from the sound processing unit 19. The display unit 23 displays a picture according to the video signal produced as a result of the connection to the selector 21 on a liquid crystal display screen or the like. The interface 24 communicates with external devices.

To be specific, the video processing unit 20 has: an IP converting unit 41 which converts an interlace signal into a progressive signal; an image quality processing unit 42 which performs a coring process or an enhancing process; a scaling unit 43 which performs a scaling process; and a γ correction unit 44 which subjects the video signals to a γ correction.

Further, the broadcast receiving apparatus 10 further includes: a storage unit 35 which records, as necessity requires, video information, etc., transmitted from the analog tuner 13; an electronic program information processing unit 36 which captures electronic program information from broadcast signals and so on and displays the information on a screen or the like; and a time/date information detecting unit 37 which captures current time/date information from TDT (time/date Table) and TOT (Time Offset Table), included in, for example, a signal received from a digital broadcast signal and demodulated. The storage unit 35, electronic program information processing unit 36, and time/date information detecting unit 37 are all connected to the control unit 30 via the data bus. In addition, the broadcast receiving apparatus 10 includes: an operating unit 32 that is connected to the control unit 30 via the data bus to respond to operations input by a user or through a remote controller R; and a display unit 33 that displays operation signals. The remote controller R has a function substantially identical to that of the operating unit 32 of the main body of the broadcast receiving apparatus 10, and allows various settings such as operating a tuner.

The control unit 30 has, in particular, a function of an analog terrestrial determining section for performing an analog broadcast termination process, which is this embodiment of the present invention (described below). On account of this function, the storage unit 35 uses a flash ROM or the like in order to store analog terrestrial termination time/date information and neighboring country information, etc., which are used for the analog broadcast termination process.

In the broadcast receiving apparatus 10 having such a configuration, a broadcast signal is input from a reception antenna to each tuner 12, 13, where a channel is selected. Modulation signals in a packet form, acquired by demodulation after the selection, are separated into groups according to packet type by the separator 17. Each sound video packet is decoded into video and sound signals by the MPEG decoder 16, etc., and the video and sound signals are supplied to the sound processing unit 19 and the video processing unit 20. In the video processing unit 20, the supplied video signal is subjected to conversion from an interlace to a progressive signal by the IP converting unit 41, then, subjected to a coring process and enhancement process by the image quality processing unit 42, and then, a scaling process by the scaling unit 43, and γ correction by the γ correction unit 44. Thereafter, this video signal is supplied to the selector 21.

The selector 21 supplies the video signal thus processed to, for example, the display unit 23 according to a control signal transmitted by the control unit 30. Consequently, a picture from the video signal is displayed on the display unit 23. In addition, sound corresponding to the sound signal supplied from the sound processing unit 19 is output from the speaker 22.

In the OSD producing unit 18, various operation information, etc., are superposed on the video signal corresponding to a broadcast signal and then passed through the video processing unit 20, so that an image corresponding to this is shown on the display unit 23.

### <Analog terrestrial Reception Termination Process according to the Embodiment of the Invention>

Next, the analog terrestrial reception termination process according to the embodiment will be descried in detail with reference to the drawings. FIG. 2 is a diagram explaining an example of analog terrestrial reception termination time/date information that the broadcast receiving apparatus according to the embodiment deals with. FIG. 3 is a diagram explaining an example of neighboring country information that the broadcast receiving apparatus according to the embodiment deals with.

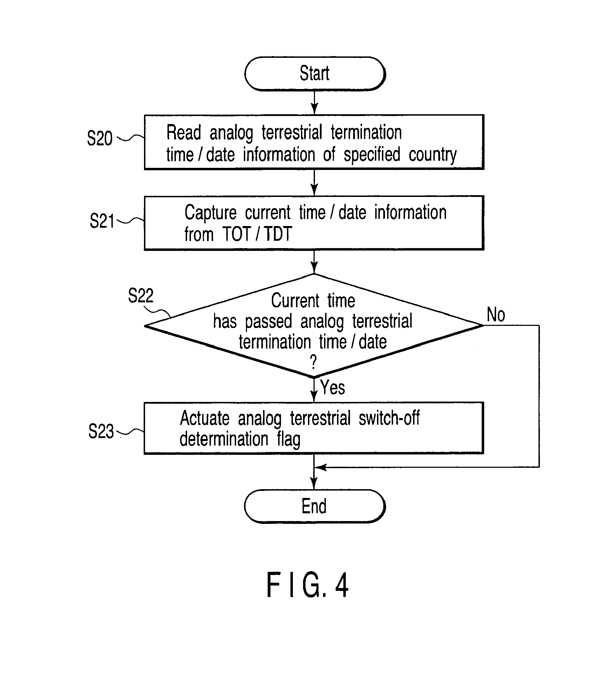

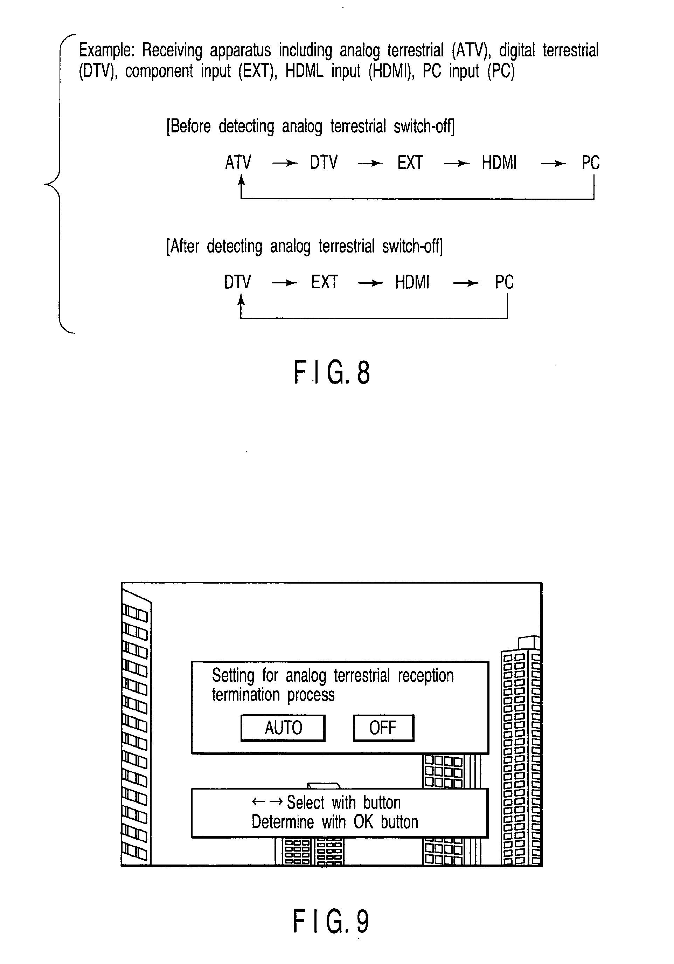

An example of the analog terrestrial reception termination process according to the present embodiment includes: the analog broadcast termination determination process (FIGS. 4, 5, and 6), whereby the analog terrestrial determining section of the control unit 30 determines analog broadcast termination based on the analog broadcast termination time/date information (FIG. 2) and neighboring country information (FIG. 3); and an analog broadcast termination process (FIG. 8), which is also performed by the analog terrestrial determination section of the control unit 30. The analog broadcast termination time/date information (FIG. 2), etc. are updated when necessary.

### (Analog Broadcast Termination Time/Date Information: FIG. 2)

The analog broadcast termination time/date information that is dealt with in the analog terrestrial reception termination process of the present embodiment includes information about each country and the date and time at which analog terrestrial broadcast terminates in this country, as shown in FIG. 2. Such information is suitably stored, at the manufacturing stage, in the storage unit 35 which uses a flash ROM or the like, as information given by official organizations or the like.

Specifically, according to an example of the analog broadcast termination time/date information shown in FIG. 2, analog terrestrial broadcasting terminates at 0:00 on **date **month in 2012 in The United Kingdom, at 0:00 on **date **month in 2008 in Sweden, at 0:00 on **date **month in 2009 in Germany, at 0:00 on **date **month in 2011 in France, and at 0:00 on **date **month in 2012 in Italy.

### (Neighboring Country Information: FIG. 3)

The neighboring country information that the analog terrestrial reception termination process of the present embodiment deals with indicates information about neighboring countries, as shown in FIG. 3, and is suitably stored at the manufacturing stage into the storage unit 35 that uses a flash ROM or the like.

Specifically, the neighboring countries of Spain are Portugal and France; those of France are Spain, Belgium, Germany, Italy, and Switzerland; and those of Switzerland are France, Germany, Austria, and Italy.

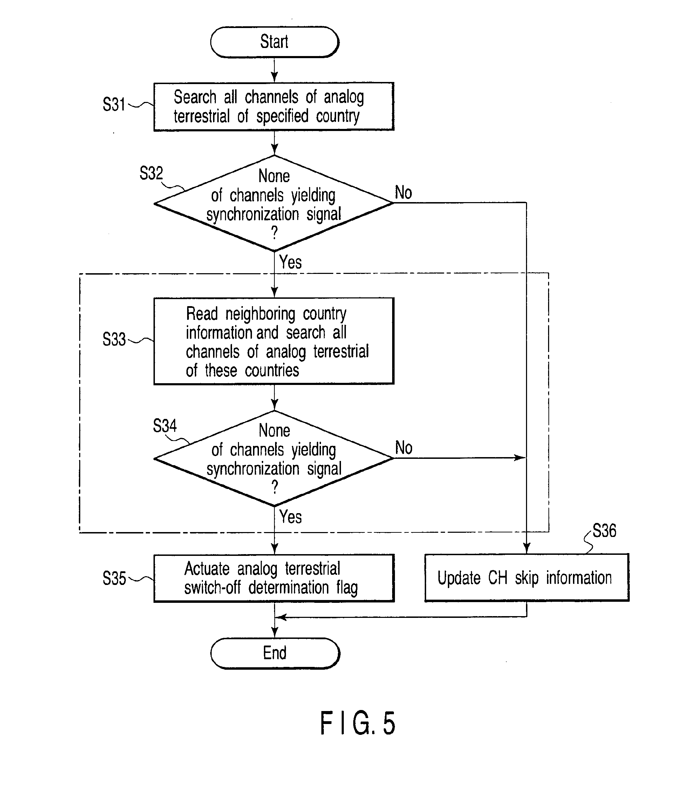

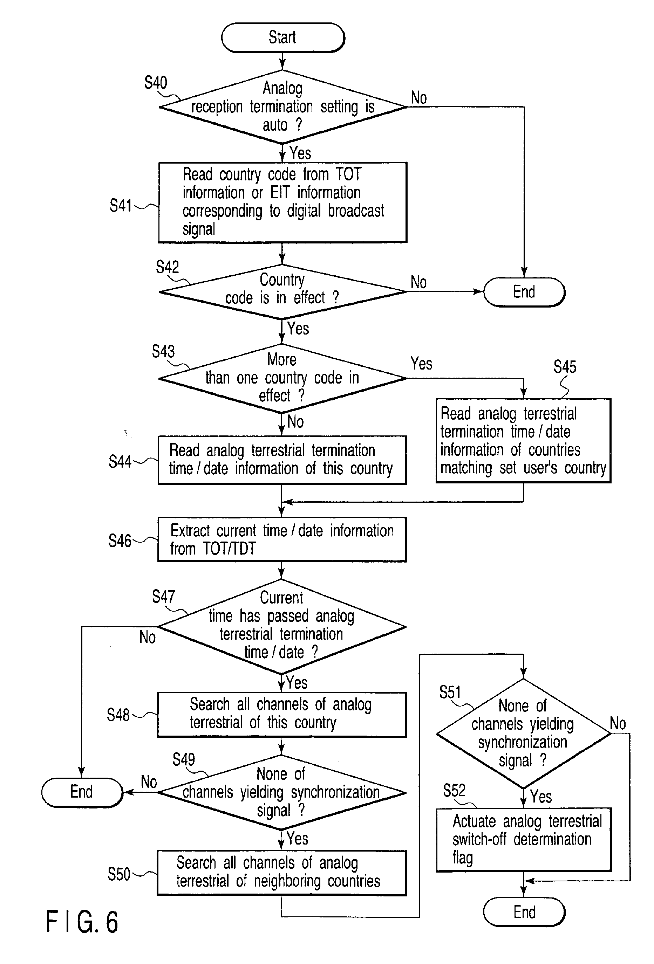

Next, each step of the analog terrestrial reception termination process performed by the broadcast receiving apparatus according to the present embodiment will be described below with reference to flowcharts. Three examples of the analog terrestrial reception termination process will be given below, in order. FIG. 4 is a flowchart illustrating a first example of the analog terrestrial reception termination process based on the time/date information, which is performed by the broadcast receiving apparatus of the embodiment. FIG. 5 is a flowchart illustrating a second example of the analog terrestrial reception termination process based on a detection signal, which is performed by the broadcast receiving apparatus of the embodiment. FIG. 6 is a flowchart illustrating a third example of the analog terrestrial reception termination process based on both time/date information and signal detection, which is performed by the broadcast receiving apparatus of the embodiment.

Incidentally, each step of the flowcharts in FIGS. 4 to 6 can be replaced with and therefore defined by a circuit block.

### - Analog Broadcast Termination Determining Process Based on Time/date Information (FIG. 4)

As shown in the flowchart in FIG. 4, the broadcast receiving apparatus 10 of the embodiment performs the analog broadcast termination determining process based on the time/date information as described below. More specifically, referring to information about a country identified from country code information stored in the storage unit 35 or TOT (Time Offset Table) or EIT (Event Information Table) corresponding to a digital broadcast signal, the analog terrestrial determining section of the control unit 30 specifies the country where the broadcast receiving apparatus 10 is being used. Then, the analog terrestrial determining section reads the analog terrestrial termination information of the specified country from the storage unit 35 (step S20). For example, Japan or The United Kingdom as shown in FIG. 2 is read as analog terrestrial termination information. Subsequently, the time/date information detecting unit 37 extracts the current time/date information from the TOT (Time Offset table) and TDT (Time/date Table) for the digital broadcast signal detected by the BS/CS/terrestrial digital tuner 12 (step 21). The analog terrestrial determining section of the control unit 30 then compares the analog terrestrial termination information of the specified country and the current time/date information, and determines whether or not the current time has passed the analog terrestrial time/date (step S22). If the determination is YES, the analog terrestrial switch-off determination flag stored in, for example, the storage unit 35, is activated (step S23).

### - Analog Broadcast Termination Determining Process Based on Signal Detection (FIG. 5)

As another method, the broadcast receiving apparatus 10 according to the present embodiment of the invention performs the analog broadcast termination process by actually detecting an analog broadcast signal, as shown in the flowchart in FIG. 5. Specifically, referring to country code information stored in the storage unit 35 and information about a country identified from the TOT or EIT for a digital broadcast signal, the analog terrestrial determining section of the control unit 30 specifies the country where the broadcast receiving apparatus 10 is being used. The analog terrestrial determining section of the control unit 30 reads the channel information of the specified country from the storage unit 35 and, based on the channel information, searches all channels of the analog terrestrial by means of the analog tuner 13 (step S31).

If even one analog broadcast synchronization signal is detected as a result of the search (step S32), the analog terrestrial determining section of the control unit 30 ends the analog broadcast termination determining process, for example, by updating the channel skip information (step S36).

If none of the channels yields an analog broadcast synchronization signal as a result of the search (step S32), on the other hand, the analog terrestrial determining section of the control unit 30 subsequently reads from the storage unit 35 neighboring country information as shown in FIG. 3 and searches all channels of the analog terrestrials of the neighboring countries of the specified country in order (step S33). If even one analog broadcast synchronization signal is detected as a result of the search (step S34), the analog terrestrial determining section ends the process, for example, by updating the channel skip information (step S36).

If this search results in none of the channels yielding an analog broadcast synchronization signal (step S34), the analog terrestrial determining section of the control unit 30 activates the analog terrestrial switch-off determination flag stored in the storage unit 35 or the like (step S35).

### - Analog Broadcast Termination Determining Process Based on Time/Date Information and Signal Detection (FIG. 6)

As shown in the flowchart in FIG. 6, the broadcast receiving apparatus 10 according to this embodiment of the invention determines the time/date information and, in addition, actually detects an analog broadcast signal, thereby performing the analog broadcast termination determining process. FIG. 9 is a diagram illustrating an example of a screen for setting the analog terrestrial reception termination process.

Specifically, as shown in the flowchart in FIG. 6, the analog terrestrial determining section of the control unit 30 determines whether AUTO has been set or not on the screen for activating the analog terrestrial reception termination process, as shown in FIG. 9 (step S40). If OFF has been set, the control unit 30 ends the flowchart without performing any operations. If AUTO has been set, the flow proceeds to step S41.

If AUTO has been set, the analog terrestrial determining section of the control unit 30 reads a country code from the TOT information for the digital broadcast signal (step S41). If it determines that the country code is in effect (step S42), the analog terrestrial determining section of the control unit 30 further determines whether or not there is more than one such country code in effect (step S43).

If it determines that only one country code in effect, the analog terrestrial determining section of the control unit 30 reads only the analog terrestrial termination time/date information of the country from the storage unit 35 (step S44). If it determines that the number of country codes in effect is more than one, the analog terrestrial determining section of the control unit 30 reads the analog terrestrial termination time/date information of these country codes (step S45).

Subsequently, time/date information detecting unit 37 extracts the current time/date information from the TOT or TDT for a digital broadcast signal detected by the BS/CS/terrestrial digital tuner 12 (step S46). The analog terrestrial determining section of the control unit 30 compares the analog terrestrial termination time/date information and the current time/date information and determines whether or not the current time has passed the analog terrestrial time/date (step S47). If the current time has not passed the analog terrestrial time, the process ends.

If it determines that the current time has passed the analog terrestrial time/date, on the other hand, the analog terrestrial determining section of the control unit 30 reads the channel information for each specified country from the storage unit 35, and causes the analog tuner 13 to search all channels of the analog terrestrial based on the channel information thus read (step S48). If even one analog broadcast synchronization signal is detected as a result of the search, the analog terrestrial determining section of the control unit 30 ends the process (step S49).

If none of the channels yields an analog broadcast synchronization signal as a result of the search (step S49), the analog terrestrial determining section of the control unit 30 reads from the storage unit 35 neighboring country information as shown in FIG. 3 and searches all channels of the analog terrestrials of the neighboring countries of the specified country in order (step S50). If even one analog broadcast synchronization signal is detected as a result of the search, the process ends (Step S51).

If this search results in none of the channels yielding an analog broadcast synchronization signal, the analog terrestrial determining section of the control unit 30 activates the analog terrestrial switch-off determination flag stored in the storage unit 35 or the like (step S52).

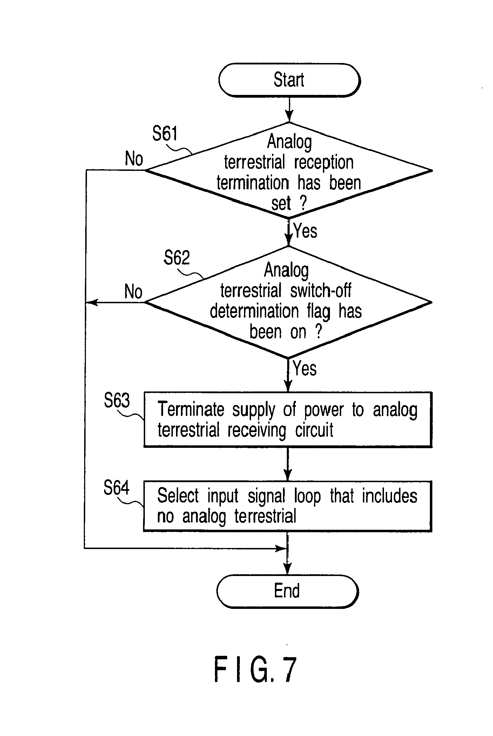

### (Analog Broadcast Termination Process: FIGS. 7 and 8)

Using the analog terrestrial switch-off determination flag thus activated, the broadcast receiving apparatus 10 according to this embodiment performs an analog broadcast termination process as described below. FIG. 7 is a flowchart illustrating an example of the analog broadcast termination process. FIG. 8 is a diagram explaining an example of the analog terrestrial reception termination process performed by the broadcast receiving apparatus of this embodiment. Incidentally, each step of the flowcharts in FIGS. 7 to 10 can be replaced with and therefore defined by a circuit block.

As shown in a flowchart in FIG. 7, the analog terrestrial determination section of the control unit 30 first determines whether, while a power source is on, the analog terrestrial reception termination process has been set through the setting screen, as exemplified in FIG. 9 (step S61). If the reception termination process has not been set, the process ends. If it determines that the analog terrestrial reception termination process has been set, on the other hand, the analog terrestrial determining section of the control unit 30 determines whether an analog terrestrial switch-off determination flag stored in the storage unit 35 has been activated or not (step S62). If it determines that this flag has been activated, the analog terrestrial determining section of the control unit 30 stops the supply of power to the corresponding analog terrestrial reception circuit, thereby terminating the analog reception function (step S63). This prevents the waste of supply of power to the analog terrestrial reception circuit where the analog terrestrial broadcast has been terminated.

Further, in terms of an input signal switching loop for the remote controller R and operating unit 32, the analog terrestrial determining section of the control unit 30 switches from a loop including an analog terrestrial (ATV) to a loop including no analog terrestrial ATV (step S64), as shown in FIG. 8. This prevents any trouble such as a user's being confused as a result of selecting an analog tuner that does not allow reception.

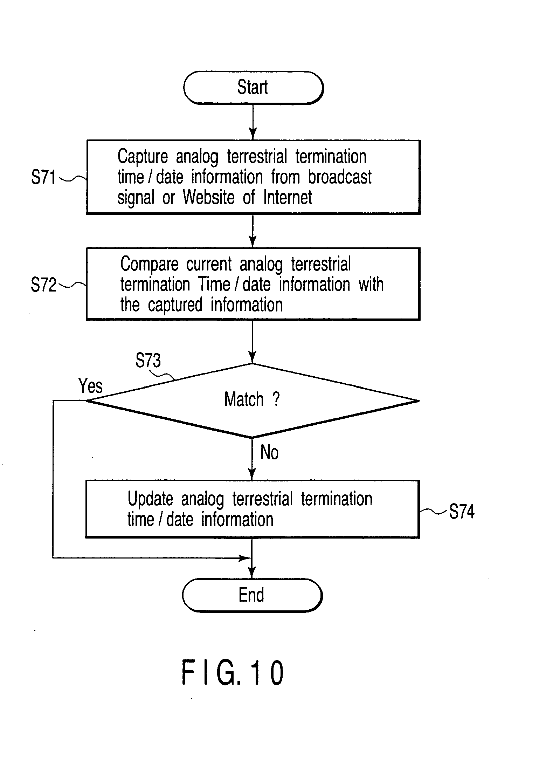

### (Analog Broadcast Termination Time/Date Information Update Process: FIG. 10)

In the broadcast receiving apparatus 10 according to the present embodiment, it is preferable that the above-described analog broadcast termination time/date information, as shown in FIG. 2, be automatically updated by digital broadcast signals or by communicating with specific websites via Internet or by directly downloading new information, via an interface, from software stored in a recording medium. FIG. 10 is a flowchart illustrating an example of the process of updating analog terrestrial reception termination time/date information, which is performed by the broadcast receiving apparatus according to this embodiment.

Specifically, at predetermined intervals (e.g., once a week) stored in the storage unit 35 or the like, the analog terrestrial determining section of the control unit 30 captures analog terrestrial termination time/date information from a digital broadcast signal through the BS/CS/terrestrial digital tuner 12 or from specific websites of Internet accessed by the communication unit 11, as shown in the flowchart in FIG. 10 (step S71). Then, the analog terrestrial determining section compares the analog terrestrial termination time/date information thus captured and the current analog terrestrial termination time/date information stored in the storage unit 35 (step S72). If the analog terrestrial determination section of the control unit 30 determines that the information does not match (step S73), the analog terrestrial termination time/date information captured is updated (step S74).

This makes it possible to perform the analog broadcast termination process according to the latest analog terrestrial termination time/date information even if the analog terrestrial termination time/date information is changed after shipment of the broadcast receiving apparatus 10.

Incidentally, it is preferable to update by downloading not only analog terrestrial termination time/date information but also attached application software when analog terrestrial termination time/date information is captured from a digital broadcast signal.

It is also preferable to update the analog broadcast termination time/date information, as shown in FIG. 2, by directly downloading new information via the interface 24, etc., from software stored in a recording medium such as a disk or memory card.

While the invention has been described in its preferred embodiment, it is to be understood that ideas for further modifications may occur to those skilled in the art without departing from the spirit of the invention and, therefore, the invention is not limited to the embodiment described above.

## Claims

1. A broadcast receiving apparatus **characterized by** comprising:
an analog receiving unit (13) which receives analog broadcast signals and output video sound signals;
a storage unit (35) which stores analog broadcast termination time/date information (FIG. 2) indicating time/date when analog broadcast is terminated;
a detecting unit (37) which captures current time/date information; and
a control unit (30) which terminates a reception function of the analog receiving unit when it is determined that analog broadcast has been terminated as a result of comparing the time/date information captured by the detecting unit with the analog broadcast termination information stored in the storage unit.

2. The broadcast receiving apparatus according to claim 1, **characterized in that** the control unit selects an input that is not from the analog receiving unit, when it is determined that the analog broadcast has been terminated.

3. The broadcast receiving apparatus according to claim 1, **characterized in that** the analog broadcast termination time/date information includes the termination time/date of at least analog terrestrial broadcasting or analog satellite broadcasting.

4. The broadcast receiving apparatus according to claim 1, **characterized in that** the control unit checks whether all analog broadcasts have been actually terminated or not, by receiving the analog broadcast signals from the analog receiving unit when it is determined that the analog broadcast has been terminated.

5. The broadcast receiving apparatus according to claim 1, **characterized in that** the detecting unit extracts the current time/date information from a signal obtained by receiving and demodulating a digital broadcast signal.

6. The broadcast receiving apparatus according to claim 1, **characterized in that** the analog broadcast termination time/date information (FIG. 2) indicates analog broadcast termination time/date corresponding to each country.

7. The broadcast receiving apparatus according to claim 1, **characterized in that** the control unit selects country information from a signal obtained by receiving and modulating a digital broadcast signal, further selecting the termination time/date information corresponding to the country from the analog broadcast termination time/date information, and determining based on the selected termination time/date information whether the analog broadcast has been terminated or not.

8. The broadcast receiving apparatus according to claim 1, **characterized in that** the control unit checks whether all analog broadcasts have been actually terminated or not, by receiving the analog broadcast signals from the analog receiving unit when it is determined that the analog broadcast has been terminated, and further checks whether all the analog broadcasts have been actually terminated or not, by receiving the analog broadcasts of neighboring countries based on neighboring country information (FIG. 3) including the information of specified countries.

9. The broadcast receiving apparatus according to claim 1, **characterized in that** the control unit extracts the analog broadcast termination time/date information (FIG. 2) via a communication path or from a digital broadcast signal and automatically updates the information.

10. The broadcast receiving apparatus according to claim 1, **characterized in that** the control unit determines according to a set signal whether or not to terminate a reception function of the analog receiving unit based on the analog broadcast termination time/date information.

11. The broadcast receiving apparatus according to claim 1, **characterized by** further comprising a display unit which displays on a screen a video image based on the video sound signals output from the analog receiving unit.

12. A broadcast receiving method **characterized by** comprising:
a step of storing, in a storage area, analog broadcast termination date/time information (FIG. 2) including time/date when analog broadcast is terminated;
a step of detecting current time/date information;
a step of reading the analog broadcast termination time/date information, and comparing the information with the detected current time/date information, thereby determining whether the analog broadcast has been terminated or not; and
a step of terminating a function of receiving the analog broadcast signal when it is determined that the analog broadcast has been terminated.
